(19) Europäisches Patentamt
European Patent Office
Office européen des brevets

(11) Veröffentlichungsnummer: **0 564 818 A2**

# (12) EUROPÄISCHE PATENTANMELDUNG

(21) Anmeldenummer: **93103466.4**

(51) Int. Cl.$^5$: **C08G 59/50**, C08G 18/32

(22) Anmeldetag: **04.03.93**

(30) Priorität: **06.04.92 DE 4211454**

(43) Veröffentlichungstag der Anmeldung: **13.10.93 Patentblatt 93/41**

(84) Benannte Vertragsstaaten: **AT BE CH DE ES FR GB IT LI NL SE**

(71) Anmelder: **Degussa Aktiengesellschaft**
**Weissfrauenstrasse 9**
**D-60311 Frankfurt(DE)**

(72) Erfinder: **Piana, Hermann, Dr.**
**Berliner Strasse 2**
**W-8755 Alzenau(DE)**
Erfinder: **Huthmacher, Klaus, Dr.**
**Lerchenweg 18**
**W-6460 Gelnhausen(DE)**

## (54) Verwendung von Isophorondiamin-Isomerengemisch in Polyadditionsharzen.

(57) Die Erfindung richtet sich auf die Verwendung von Isophorondiamin-Isomerengemischen, bestehend aus über 40 %, bevorzugt über 50 bis 70 %, des trans- und unter 60 %, bevorzugt unter 50 bis 30 %, des cis-Isomeren, als Reaktionskomponente in Polyadditionsharzen aus der Reihe der Epoxid-, Polyurethan- und Polyharnstoffharze. Die Isomerengemische führen als Härter in Epoxidharzen gegenüber vorbekannten Isomerengemischen zu einer verlängerten Topfzeit bei gleichzeitig reduzierter maximaler Härtungstemperatur und damit weniger Schrumpfproblemen. Die Isomerengemische sind auch als Aminkomponente mit reduzierter Reaktivität zur Kettenverlängerung von Polyurethan/Polyharnstoffen geeignet.

EP 0 564 818 A2

Die Erfindung betrifft die Verwendung von Isophorondiamin-Isomerengemischen als Reaktionskomponente in Polyadditionsharzen aus der Reihe der Epoxidharze und Polyurethan-/Polyharnstoffharze.

Bei Isophorondiamin (IPDA) handelt es sich um 1-Amino-3-aminomethyl-3,5,5-trimethylcyclohexan, das im handelsüblichen Produkt ein Isomerengemisch darstellt. Für das zu etwa 75 % vorliegende Isomere wurde eine Sesselkonformation mit einer cis-Anordnung der equatorialen Aminogruppe am $C^1$-Atom und der equatorialen Aminomethylgruppe am $C^3$-Atom festgestellt; bei dem zu etwa 25 % anwesenden Isomeren handelt es sich um das trans-Isomere mit equatorialer Amino- und axialer Methylaminogruppe (Die Angewandte Makromolekulare Chemie 153 (1987) 1-13). Sowohl das handelsübliche Isophorondiamin als auch das hieraus zugängliche Isophorondiisocyanat (IPDI) mit unverändertem Isomerenverhältnis werden im Epoxidharzsektor und Polyurethanharzsektor verwendet.

Epoxidharze sind Präpolymere, welche pro Molekül zwei oder mehr Epoxidgruppen enthalten; die Reaktion dieser Harze mit einer Reihe von Härtungsmitteln führt zu vernetzten Polymeren - einen Überblick über die Harze und Härter sowie deren Anwendung und Eigenschaften der gehärteten Harze vermittelt Ullmann's Encyclopedia of Industrial Chemistry 5th ed. (1987) 547-563. Je nach den für bestimmte Einsatzgebiete geforderten Eigenschaften enthalten Epoxidharzformulierungen außer einem oder mehreren epoxygruppenhaltigen Harz und einem oder mehreren Härtern Lösungsmittel, Reaktivverdünner, Weichmacher, Füllstoffe und Reaktionsbeschleuniger.

Es ist bekannt, zur Härtung von Epoxidharzen, etwa solchen auf der Basis von Bisphenol-A-diglycidylether, neben zahlreichen anderen aminischen Härtern auch cycloaliphatische Diamine, darunter handelsübliches Isophorondiamin (IPDA), zu verwenden. Beispielhaft wird auf die DE-OS 31 37 898 und die GB-PS 1 515 473 verwiesen, welche sich auf Epoxidharzmassen zum Einbetten elektrischer Bauteile beziehungsweise für Beschichtungszwecke richten, wobei als Härtungskomponenten auch handelsübliches Isophorondiamin Einsatz findet.

In aller Regel ist es zum Erhalt optimaler Eigenschaften ausgehärteter Epoxidharze wichtig, einen möglichst hohen Aushärtungsgrad zu erzielen. Um dieses Ziel zu erreichen, werden bei der Verwendung von handelsüblichem Isophorondiamin gemäß Paintindia, May 1987, 25-28 zweckmäßigerweise zwei Arten von Reaktionsbeschleunigern eingesetzt, nämlich solche zur Beeinflussung der Verarbeitungszeit (Topfzeit) und solche zur Beeinflussung der Vernetzungsdichte.

Epoxidharzsysteme sind nach dem Zusammenrühren eines Epoxidharzes mit einem Aminhärter reaktiv und haben eine begrenzte Verarbeitungszeit. Dies ist oft ein Nachteil, wenn in der zur Verfügung stehenden Zeit die angesetzte Menge nicht verarbeitet werden kann. Es bestand somit ein Bedarf an einem solchen cycloaliphatischen Aminhärter, der die Vorteile des handelsüblichen Isophorondiamins mit der eingangs beschriebenen Isomeren-Zusammensetzung mit einer verlängerten Verarbeitungszeit kombiniert. Außer der Verlängerung der Topfzeit unter Beibehaltung einer guten Aushärtung und Beständigkeit der Epoxidharze bestand auch ein Interesse daran, die maximale Temperatur bei der Aushärtung möglichst zu erniedrigen, weil damit eine Reduzierung des Schrumpfes einhergeht.

Es ist ferner bekannt, Diisocyanate oder isocyanatgruppenhaltige Präpolymere, welche außer Urethanauch Harnstoff-, Biuret-, Isocyanurat-, Carbonamid- oder Carbodiimid-Strukturelemente aufweisen können, in einer Polyadditionsreaktion mit Diaminen, darunter auch handelsüblichem Isophorondiamin, umzusetzen (Ullmann's Enzyklopädie der Technischen Chemie, 4. Auflage, Band 19, 301-317, insbesondere Seiten 302, 306, 308-310). Durch Diamine als Reaktionskomponente in den genannten Systemen werden Harnstoffgruppen in das Makromolekül eingeführt. Es handelt sich um eine sogenannte Amin-Kettenverlängerung, wobei Polyurethan-harnstoffe gebildet werden.

Infolge der hohen Reaktivität von Aminogruppen gegenüber NCO-Gruppen werden vielfach sterisch gehinderte oder Diamine mit elektronenanziehenden Substituenten zur Kettenverlängerung bevorzugt. Es besteht somit ein Bedarf, die Palette an Diaminen mit verminderter Reaktivität als Reaktionskomponente zum Aufbau von Polyurethanen/-harnstoffen durch Polyaddition zu erweitern, um die durch die hohe Reaktivität bekannter Amine bedingten Probleme, wie Inhomogenitäten wegen zu kurzer Topfzeit und verminderte Selektivität bei der Reaktion, zu beheben.

Es wurde nun gefunden, daß sich die aufgezeigten Probleme dadurch beheben lassen, daß man als Reaktionskomponente in Polyadditionsharzen aus der Reihe der Epoxidharze und Polyurethan-/Polyharnstoffharze ein Isophorondiamin-Isomerengemisch verwendet, das aus über 40 % des trans-Isomeren und unter 60 % des cis-Isomeren besteht.

Vorzugsweise werden solche Isomerengemische verwendet, welche aus über 50 % des trans- und unter 50 % des cis-Isomeren, insbesondere aus über 50 bis 70 % des trans- und unter 50 bis 30 % des cis-Isomeren bestehen.

Die erfindungsgemäß zu verwendenden Isophorondiamin-Isomerengemische lassen sich mittels dem Fachmann bekannter Fraktionierungsmethoden - das cis-Isomere siedet höher als das trans-Isomere - aus

handelsüblichem Isophorondiamin mit etwa 75 % des cis- und etwa 25 % des trans-Isomeren gewinnen. Nachteilig an diesem Verfahren ist aber der nicht unerhebliche technische Aufwand sowie der hohe Anfall an dem cis-Isomeren.

Durch ein Verfahren gemäß nachstehender Reaktionsgleichung läßt sich Isophorondiamin mit der Isomerenverteilung von über 50 bis 70 % des trans- und unter 50 bis 30 % des cis-Isomeren einfach herstellen.

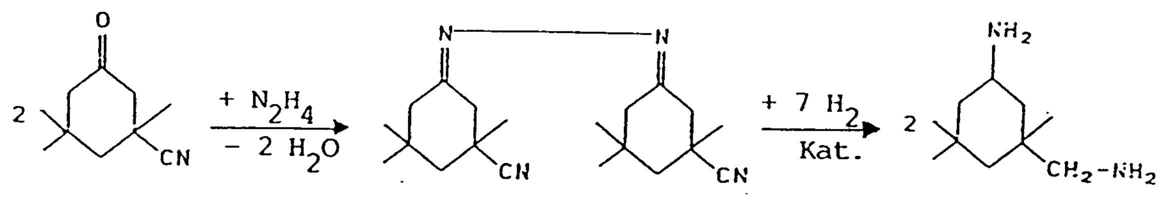


(IPN) (IPN-azin) (IPDA)

Isophoronnitril wird mit einer Quelle für Hydrazin im Molverhältnis 2 zu 1 in Gegenwart eines Lösungsmittels in das Isophoronnitril-azin überführt; das Azin wird in Gegenwart eines Lösungsmittels, wie Wasser oder Alkohole, durch eine hydrierende Azinspaltung in Gegenwart von Ammoniak und einem Katalysator aus der Reihe der (a) nickelhaltigen Trägerkatalysatoren, (b) Edelmetallkatalysatoren oder (c) Nickel- bzw. Kobalt-Raneykatalysatoren in Gegenwart von Cokatalysatoren aus der Reihe von Ammoniumsalzen von Mineralsäuren oder Carbonsäuren oder von Salzen von Ni, Co, Al, Y, La, Ce, Ru, Rh, Pd, Ir, Pt, mittels Wasserstoff in einem Schritt zum Diamin der genannten Isomerenzusammensetzung hydriert.

Das erfindungsgemäß zu verwendende Isophorondiamin-Isomerengemisch kann als alleinige Härterkomponente oder im Gemisch mit anderen bekannten Härtern auf Amin- oder Amidbasis zur Härtung von Epoxidharzen unterschiedlicher chemischer Struktur und unterschiedlichen Molekulargewichts eingesetzt werden.

Nieder-, mittel und hochmolekulare Epoxidharze auf der Basis von Glycidylethern von Bisphenol A sowie anderen mehrwertigen Phenolen und Phenol-Aldehyd-Addukten, ferner von Glycidylethern heterocyclischer Amide und Imide, wie z. B. Triglycidylisocyanurat, aliphatischer und cycloaliphatischer Diole und Polyole sowie aromatischer Amine und Epoxidharze auf der Basis von Glycidylestern und epoxidierten cycloaliphatischen Olefinen lassen sich unter Verwendung des erfindungsgemäßen IPDA-Isomerengemischs härten. Die Aminmenge wird in bekannter Weise in zum Epoxidgehalt des Harzes äquivalenter Menge eingesetzt.

Wie allgemein bekannt, enthalten die zu härtenden Epoxidharzformulierungen auch häufig Zusatzstoffe aus der Reihe der Weichmacher, wie z. B. Dialkylphthalate und Phosphorsäureester, ferner Beschleuniger zur Erzielung einer ausreichenden Durchhärtung, Lösungsmittel einschließlich Reaktivverdünner, z. B. vom Typ der Monoglycidylether oder anderer Monoepoxide, Farbstoffe, Pigmente, Füllstoffe. Bezüglich der einzelnen Stoffe wird auf die beispielhaft genannten Dokumente verwiesen.

Epoxidharzformulierungen, welche anstelle handelsüblichen Isophorondiamins (IPDA) mit etwa 75 % des cis-Isomeren erfindungsgemäßes IPDA-Isomerengemisch mit einem Gehalt von über 40 % und vorzugsweise über 50 bis 70 % des trans-Isomeren enthalten, weisen überraschenderweise eine verlängerte Topfzeit auf. Eine verlängerte Topfzeit des Epoxidharz-Amin-Gemischs ist insbesondere dann erwünscht, wenn zum Zwecke einer ausreichenden Durchhärtung einerseits Beschleuniger eingesetzt werden müssen, durch welche aber andererseits die Topfzeit reduziert wird, was ohne entsprechende Gegenmaßnahme zu Problemen bei der Handhabung und Verarbeitungssicherheit nach sich zieht. In solchen Fällen bildet die Verwendung des erfindungsgemäßen Isomerengemischs eine echte Problemlösung.

Völlig überraschend geht mit der erfindungsgemäßen Verwendung neben der Verlängerung der Topfzeit auch eine wesentliche Erniedrigung der maximalen Härtungstemperatur einher. Diese im Hinblick auf einen verringerten Schrumpf erwünschte Temperaturabsenkung führt nicht zu einer schlechteren Durchhärtung. Vielmehr sind die mechanischen Eigenschaften und die Haftfestigkeit der mit handelsüblichem oder mit erfindungsgemäßem IPDA-Isomerengemisch gehärteten Epoxidharze weitgehend gleich.

Das erfindungsgemäße Isophorondiamin-Isomerengemisch läßt sich auch mit Erfolg als Aminkomponente zur Kettenverlängerung in Polyurethanen beziehungsweise Polyharnstoffen verwenden. Es wird angenommen, daß die sterische Hinderung der axial konfigurierten Aminomethylgruppe am $C^3$-Atom zu dieser

Minderung der Reaktivität führt.

**Beispiele**

In den nachfolgenden Beispielen und Vergleichsbeispielen wurden jeweils ein Epoxidharz auf der Basis von Bisphenol-A-diglycidylether (Epoxidzahl 5,30 Äquivalente/kg, Viskosität bei 25 °C 10.400 mPa's) und Isophorondiamin - erfindungsgemäßes Isomerengemisch mit 59 % trans- und 41 % cis-Isomer beziehungsweise handelsübliches Isomerengemisch mit 24 % trans- und 76 % cis-Isomer - bei 23 °C beziehungsweise 40 °C und 50 % rel. Luftfeuchte gemischt und die Mischung 5 Minuten bei 20 hPa entgast. Die Mischung der Beispiele 1 und 1 VG (=Vergleichsbeispiel) enthielt keine weiteren Zusätze. Die Mischung der Beispiele 2 und 2 VG enthielt zum Zwecke verbesserter Durchhärtung zusätzlich Benzylalkohol, worin das IPDA zunächst gelöst wurde. Die Mischung der Beispiele 3 und 3 VG enthielt zusätzlich zu Benzylalkohol Salicylsäure, wobei aus IPDA Benzylalkohol und Salicylsäure zunächst eine Lösung hergestellt wurde. Die Einsatzmengen und die Ergebnisse der Bestimmung der Gebrauchsdauer (Topfzeit), des Temperaturanstiegs bei der Härtung in Abhängigkeit von der Ansatzgröße und der Lackprüfung folgen aus den Tabellen 1 bis 3.

Tabelle 1

| Beispiel Nr. | 1 | 1 VG | 2 | 2 VG | 3 | 3 VG |
|---|---|---|---|---|---|---|
| Einsatzmengen (Gew.teile) | | | | | | |
| Epoxidharz (5,3 eq./kg) | 84,0 | 84,0 | 116,3 | 116,3 | 112,3 | 112,3 |
| IPDA (59 % trans/ 41 % cis) | 20,0 | | 26,1 | | 25,0 | |
| IPDA (76 % cis/ 24 % trans) | | 20,0 | | 26,1 | | 25,0 |
| Benzylalkohol | | | 23,9 | 23,9 | 22,0 | 22,0 |
| Salicylalkohol | | | | | 3,0 | 3,0 |
| Gebrauchsdauer (Min.) | | | | | | |
| 10 g/23 °C | 245 | 240 | | | 78 | 75 |
| 10 g/40 °C | | | 60 | 57 | | |

**T a b e l l e 2**

| Beispiel Nr. | 1 | 1 VG | 2 | 2 VG | 3 | 3 VG |
|---|---|---|---|---|---|---|
| Temperaturanstieg 20 g-Ansatz | | | | | | |
| $T_{max}$ (°C) | 24 | 28 | | | 68 | 78 |
| Zeit bis $T_{max}$ (Min.) | 150 | 150 | | | 45 | 43 |
| Temperaturanstieg 200 g-Ansatz | | | | | | |
| $T_{max}$ (°C) | | | 196 | 198 | 170 | 192 |
| Zeit bis $T_{max}$ (Min.) | | | 49 | 46 | 33 | 29 |
| Viskositätsanstieg in 15 Min (mPa·s) (Startviskosität 300 mPa·s) | | | | | 11.000 | 17.000 |

Die Gebrauchsdauer wurde einem Gelnorm® Geltimer der Fa. Bachofer in Anlehnung an DIN 16945 bestimmt. Der Temperaturanstieg wurde bei 50 % relativer Feuchte in einem temperierten PE-Becher mit auf die angegebene Temperatur vorgewärmten Komponenten ermittelt.

Tabelle 3

| Die lacktechnische Prüfung wurde an Bonderblechen (Chemetall Nr. 129611 mit Bonder-Rostschutz 26/NL60) bei einer Trockenfilmdicke von 45 ± 5 µm durchgeführt. | | | |
|---|---|---|---|
| Versuch | | 3 | 3 VG |
| Härtung | (Min)<br>(°C) | 30<br>120 | 30<br>120 |
| Glaspunkt Tg (°C) (Differential-Kalorimetrie) | | 82 | 83 |
| Pendelhärter (s) nach König (DIN 53157) | | 213 | 209 |
| Gitterschnitt (DIN 53151) | | 3-4 B | 3-4 B |
| Tiefungsprüfung (mm) (DIN 1520) | | 4 | 4 |
| Schlagbeständigkeit (cm) (DIN 30670) | | r 15<br>f 90 | r 10<br>f 90 |
| r = Rückseite<br>f = Vorderseite | | | |

**Beispiel 4 und Vergleichsbeispiel 4 VG**

Testproben wurden hergestellt, indem Epoxidharze der Zusammensetzung gemäß Beispiel 3 und Vergleichsbeispiel 3 VG in eine Gießform (300 x 200 x 4 mm) gegossen wurden; die Harze wurden 2 Stunden bei 120 °C gehärtet. Die Lösungsmittelbeständigkeit wurde an 50 x 50 x 4 mm Platten nach DIN 53495 getestet; die Spannungseigenschaften wurden gemäß DIN 53455 und 53457 untersucht.

Die in Tabelle 4 zusammengestellten Ergebnisse zeigen, daß ein Epoxidharz auf der Basis von Bisphenol A-diglycidylether und erfindungsgemäßem Isophorondiamin-Isomerengemisch (59 % trans- und 41 % cis-Isomere) eine verbesserte Säurebeständigkeit und einen erhöhten Elastizitätsmodul im Vergleich zu einem Harz mit einem handelsüblichen Isomerengemisch (24 % trans- und 76 % cis-Isomere) aufweist; weitere untersuchte Eigenschaften (Tabelle 4) des gehärteten Harzes erwiesen sich vom eingesetzten Isomerengemisch nicht abhängig.

Tabelle 4

| Beispiel | 4 | 4 VG |
| --- | --- | --- |
| Lösungsmittelbeständigkeit % Gewichtszunahme nach 8 Wochen in | | |
| Wasser | 1,6 | 1,6 |
| 10 % Ethanol | 1,6 | 1,6 |
| 10 % HCl | 1,6 | 1,9 |
| 10 % NaOH | 0,1 | 0,1 |
| Zugspannung ($N/mm^2$) | 62,4 | 62,4 |
| Dehnung (%) | 3,9 | 3,9 |
| E-Modul ($N/mm^2$) | 2160 | 1550 |

**Patentansprüche**

1. Verwendung von Isophorondiamin-Isomerengemischen, bestehend aus über 40 % des trans-Isomeren und unter 60 % des cis-Isomeren, als Reaktionskomponente in Polyadditionsharzen aus der Reihe der Epoxid-, Polyurethan- und Polyharnstoffharze.